# EUROPÄISCHE PATENTANMELDUNG

(11) **EP 1 070 939 A2**
(43) Veröffentlichungstag der Anmeldung: **24.01.2001**
(21) Anmeldenummer: 00107511.8
(22) Anmeldetag: 07.04.2000
(51) Int. Cl.: G01D 21/00, G01V 3/06

(54) **Verfahren und Vorichtung zur Ortung einer metallischen Leitung**

(30) Priorität: 16.07.1999 DE 19933333
(71) Anmelder: Hagenuk KMT Kabelmesstechnik GmbH, 01471 Radeburg (DE)
(72) Erfinder: Fraedrich, Volker, 01762 Schmiedeberg (DE); Wendel, Christoph, 01471 Radeburg (DE); Fischer, Gerhard, 01069 Dresden (DE)
(74) Vertreter: Hansmann, Dierk, Dipl.-Ing.

(57) **Zusammenfassung**

Es wird ein Verfahren und eine Vorrichtung zur Ortung einer metallischen Leitung durch Einkopplung eines Sendesignals in die Leitung und Empfangen und Auswerten des Pegels eines von der Leitung abgestrahlten Empfangssignals beschrieben, das / die sich insbesondere dadurch auszeichnet, daß das Sendesignal durch Modulation einer ersten Trägerfrequenz mit einer zweiten, niedrigen Frequenz erzeugt wird, und das Empfangssignal im Hinblick auf seine Periodendauer und auf seine von der Ausrichtung einer Empfangsantenne zu der Leitung anhängigen Polarität ausgewertet wird, um eine Signalisierung "Abgehendes Sendesignal" oder "Ankommendes Sendesignal" bezüglich der Richtung des Signalflusses in der Leitung zu erzeugen.

## Beschreibung

Die Erfindung betrifft ein Verfahren und eine Vorrichtung zur Ortung einer metallischen Leitung durch Einkopplung eines Sendesignals in die Leitung und Empfangen und Auswerten des Pegels eines von der Leitung abgestrahlten Empfangssignals.

Es sind Verfahren und Vorrichtungen dieser Art bekannt, mit denen der Verlauf einer metallischen und elektrisch leitfähigen Leitung (Kabel, Rohrleitung) geortet werden kann, wenn ein elektrischer Strom durch die Leitung fließt, wobei mit einem Empfangsgerät das elektromagnetische Feld dieses Stromes aufgenommen, verarbeitet und angezeigt wird. Bei einem Verfahren zur Verbesserung der Ortung einer Leitung wird ein Sender angewendet, dessen definiertes Signal kapazitiv, induktiv oder galvanisch auf die Leitung gekoppelt wird und einen Stromfluß in der Leitung bewirkt. Dadurch kann die Ortung dieser Leitung mit einem Empfänger, der für den selektiven Empfang des definierten Signals des Senders optimiert ist, vorgenommen werden.

Die Ortung einer Leitung ist mit relativ einfachen Verfahren und Vorrichtungen möglich, wenn die Leitung einzeln verlegt ist. In der Praxis besteht jedoch vielfach das Problem, daß mehrere Leitungen mit vergleichsweise geringem Abstand nebeneinander verlaufen. Obwohl das Signal des Senders an nur eine Leitung geschaltet ist, kann dieses primäre Signal im Verlauf der Leitung kapazitiv, induktiv oder galvanisch in eine oder mehrere andere Leitungen eingekoppelt werden. Der in diesen anderen Leitungen fließende sekundäre Strom führt dann zu Fehlortungen.

Eine Verbesserung der Leitungsortung kann erreicht werden, wenn der Empfänger zusätzlich über Mittel zur Messung und Anzeige der Verlegetiefe der Leitung und der resultierenden Stromstärke in der Leitung verfügt. Eine Verfälschung dieser Meßwerte tritt jedoch dann auf, wenn sich die Felder mehrerer Leitungen überlagern und abhängig von der Richtung des Signalflusses das resultierende Feld verstärken oder vermindern. So ist es nicht möglich, zwei Leitungen voneinander zu unterscheiden, wenn in der einen zu ortenden Leitung der primäre Sendestrom fließt und über eine zweite Leitung der Stromkreis zum Sender geschlossen wird, beispielsweise bewirkt durch gemeinsame Stromkreise für den Potentialausgleich.

Eine weitere Verbesserung der Ortung kann erreicht werden, wenn das Signal des Senders eine Kennung erhalt, aus der die Richtung des Signalflusses vom oder zum Sender eindeutig bestimmt werden kann.

In der US 5,260,659 wird ein Verfahren und eine Vorrichtung mit einem Sender beschrieben, der zwei Frequenzen erzeugt, wobei eine erste Frequenz ein ganzzahliges Vielfaches einer zweiten Frequenz ist. Bei einer weiteren Ausbildung der Vorrichtung wird eine erste Frequenz und eine zweite Frequenz erzeugt, zu der eine subharmonische Frequenz der ersten Frequenz addiert oder subtrahiert wird. Für die Leitungsortung wertet ein Empfänger die Phasenverhältnisse der Frequenzen aus und ermöglicht so die Bestimmung der Richtung des Signalflusses.

Ein ähnliches Instrument zur Ortung einer Leitung in einem Netz mehrerer Leitungen ist in der US 5,438,266 beschrieben. Mit einem Sender werden eine geradzahlige Harmonische und eine ungeradzahlige Harmonische einer Frequenz erzeugt und an die zu ortende Leitung geschaltet. Ein Empfänger enthält Antennen und Filter, die auf diese Frequenzen abgestimmt sind. Durch die Bewertung der Phasenverhältnisse, insbesondere die Umkehrung der Phasenverhältnisse, kann die Ortung der Leitung erfolgen.

Ein wesentlicher Nachteil der vorgenannten Verfahren und Vorrichtungen besteht darin, daß eine sichere Ortung nur bei vergleichsweise kurzen Längen der zu ortenden Leitung gelingt. Begründet ist dieser Nachteil durch die unterschiedlichen Änderungen der Phasenverhältnisse der Frequenzen, hervorgerufen durch parasitäre komplexe Komponenten der Leitung, beispielsweise die Eigenkapazität oder die Eigeninduktivität der Leitung. Weiterhin besteht ein relativ hoher Aufwand bei der Realisierung einer hinreichend großen Selektivität der Antennen und Filter des Empfängers, die jeweils getrennt für jede der vom Sender erzeugten Frequenzen optimiert werden müssen.

Eine weitere Vorrichtung zur Ortung des Verlaufes von Leitungen ist in der DE 3708968 offenbart. Dort wird dem Signal eines Senders eine in Stromrichtung verlaufende Kennung überlagert. Ein spezieller Empfänger wertet die Kennung aus und ermöglicht so die Bestimmung der Stromrichtung. Die Kennung erfolgt durch eine Überlagerung des Sendesignals mit unipolaren Impulsen, die mit dem Sendesignal synchronisiert werden. Bei einer weitere Ausbildung der Vorrichtung wird das Sendesignal in zeitlich begrenzte Abschnitte aus mindestens einer Sinusperiode zerlegt, wobei nach einer Sendepause der Beginn eines Abschnittes mit definierter Flanke des Sinussignals erfolgt. Ein wesentlicher Nachteil dieser Vorrichtung besteht darin, daß der Empfänger für den Empfang des unsymmetrischen und/oder nichtperiodischen Signals vergleichsweise breitbandig dimensioniert sein muß und damit durch die geringe Selektivität ein erheblicher Einfluß störender Frequenzen, beispielsweise von Oberwellen des Energienetzes, möglich ist.

Alle vorgenannten Verfahren und Vorrichtungen haben den Nachteil, daß die Nutzung mehrerer verschiedener periodischer Signale oder unsymmetrischer Signale erhöhten Aufwand im Empfänger bedingen, um hinreichend große Selektivität gegenüber Störeinflüssen zu realisieren und daß durch den Einfluß der komplexen Parameter der Leitung, beispielsweise der Kapazität oder der Induktivität, eine Abhängigkeit zwischen der Länge der Leitung und der Phasenverschiebung der Signale besteht.

Der Erfindung liegt deshalb die Aufgabe zugrunde, ein Verfahren und eine Vorrichtung zur Ortung des Verlaufes einer metallischen Leitung der eingangs genannten Art anzugeben, mit dem/der insbesondere bei mehreren parallel verlaufenden Leitungen eine sicherer Identifizierung einer Leitung und eine genauere Ortung des Verlaufes der Leitung möglich ist.

Diese Aufgabe wird mit einem Verfahren der eingangs genannten Art dadurch gelöst, daß das Sendesignal durch Modulation einer ersten Trägerfrequenz mit einer zweiten, niedrigeren Frequenz erzeugt wird, und daß das Empfangssignal im Hinblick auf seine Periodendauer und seine von der Ausrichtung einer Empfangsantenne zu der Leitung abhängigen Polarität ausgewertet wird, um eine Signalisierung "Abgehendes Sendesignal" oder "Ankommendes Sendesignal" bezüglich der Richtung des Signalflusses in der Leitung zu erzeugen.

Die Aufgabe wird ferner mit einer Vorrichtung der eingangs genannten Art gelöst, die sich dadurch auszeichnet, daß der Sender ein erstes Mittel zur Erzeugung einer ersten Trägerfrequenz, ein zweites Mittel zur Erzeugung einer zweiten, niedrigen Frequenz, sowie einen Modulator zur Modulation der ersten Frequenz mit der zweiten Frequenz aufweist, und daß der Empfänger eine Auswerteeinrichtung umfaßt, mit der das Empfangssignal im Hinblick auf seine Periodendauer und seine von der Ausrichtung einer Empfangsantenne zu der Leitung anhängigen Polarität ausgewertet wird und die eine zweite Signalisationseinheit für ein "Abgehendes Signal" und eine dritte Signalisationseinheit für ein "Ankommendes Signal" beaufschlagt.

Die Vorteile der erfindungsgemäßen Lösungen ergeben sich durch die einfach zu realisierende hohe Selektivität des Empfängers, die Unabhängigkeit von den speziellen komplexen elektrischen Parametern und der Länge der Leitung, sowie die eindeutige Bewertung der Empfangssignale unabhängig von der Art der Kopplung des Sendesignals von der besendeten primären Leitung auf andere sekundäre Leitungen. Weitere Vorteile ergeben sich durch den sehr weiten Bereich des Frequenzbandes, wobei keine wesentlichen Beschränkungen hinsichtlich der Frequenz und der Bandbreite bestehen. Durch die Wahl der Grundfrequenz des Sendesignals entsprechend dem Typ der zu ortenden Leitung mit ihren speziellen komplexen elektrischen Parametern ist eine einfache Anpassung des Verfahrens bzw. der Vorrichtung möglich. So ergeben sich Vorteile, wenn für Leitungen mit großer Eigenkapazität, beispielsweise isolierte Rohrleitungen mit großer Manteloberfläche, die Grundfrequenz relativ klein, jedoch in verzweigten Netzen mit kurzen Kabeln die Grundfrequenz relativ hoch ist.

Weitere Einzelheiten, Merkmale und Vorteile der Erfindung ergeben sich aus der folgenden Beschreibung einer bevorzugten Ausführungsform der Erfindung anhand der Zeichnung. Es zeigt:
- Fig. 1: ein Blockschaltbild einer solchen erfindungsgemäßen Vorrichtung mit Sender, Leitung und Empfänger;
- Fig. 2: ein Blockschaltbild des Empfängers;
- Fig. 3: den schematischen Verlauf verschiedener Signale für den Zustand "Abgehend"; und
- Fig. 4: den schematischen Verlauf verschiedener Signale für den Zustand "Ankommend"

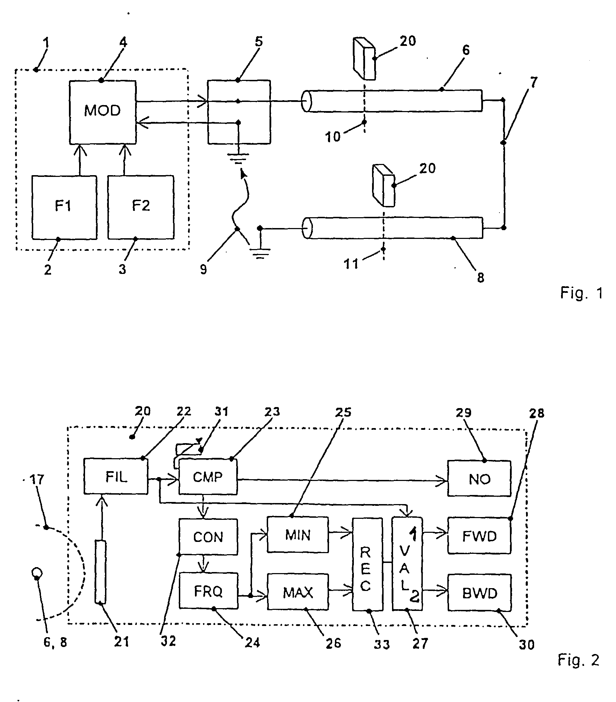

Aus dem Übersichtsschaltplan in Fig. 1 ist ersichtlich, daß ein Sender 1 ein erstes Mittel 2 zur Erzeugung einer ersten Frequenz F1, ein zweites Mittel 3 zur Erzeugung einer zweiten Frequenz F2 und einen Modulator 4 zur Verknüpfung beider Frequenzen F1 und F2 aufweist. Ein zweipoliger Ausgang des Senders 1 ist an einem Koppelpunkt 5 mit einem Pol an eine zu ortende erste Leitung 6 und mit dem anderen Pol an eine Erdungseinrichtung 9 geschaltet. Der Signalfluß erfolgt abgehend vom Sender 1 über den Koppelpunkt 5 in die erste Leitung 6, eine elektrische Verbindung 7, eine zweite Leitung 8, eine Erdungseinrichtung 9, und schließlich ankommend am Sender 1. Dargestellt sind jeweils eine Position eines Empfängers 20 an einer ersten Position 10 über der ersten Leitung 6 und einer zweiten Position 11 über der zweiten Leitung 8.

Die erste Frequenz F1 ist wesentlich größer als die zweite Frequenz F2, wobei der Faktor zwischen beiden vorzugsweise größer als 50 ist.

Die erste Frequenz F1 wird mit der zweiten Frequenz F2 moduliert, beispielsweise durch Frequenzmodulation, wobei die Parameter der Modulation derart vorgegeben werden, daß der Sender 1 ein relativ schmalbandiges Signal erzeugt, das an die zu ortende erste Leitung 6 geschaltet und von dem Empfänger 20 detektiert werden kann. Es ist nicht zwingend erforderlich, daß die erste und die zweite Frequenz sinusförmig sind und daß beide Frequenzen ein geradzahliges Verhältnis zueinander haben.

Fig. 2 zeigt ein Blockschaltbild des Empfängers 20, der sich in der Nähe der ersten oder zweiten Leitung 6, 8 befindet und das Sendesignal 17 mit einem kapazitiven, induktiven oder galvanischen Sensor 21 als Empfangsantenne aufnimmt. Ein Filter 22 ist auf die Grundfrequenz der ersten Frequenz F1 abgestimmt und mit einer auf die Modulation der ersten mit der zweiten Frequenz F2 abgestimmten Bandbreite als Bandpaß zur schmalbandigen Selektion dimensioniert. Mit dem Ausgang des Filters 22 ist ein Bewerter 27 sowie ein Komparator 23 zur Bewertung der Signalstärke verbunden, der eine Einrichtung 31 zur Einstellung einer vorgegebenen Schwelle für den Pegel des Empfangssignals aufweist. Ein erster Ausgang des Komparators 23 liegt an einem Konverter 32, ein zweiter Ausgang an einer ersten Signalisationseinheit 29 für einen Zustand "Kein Signal" an. Der Konverter 32 wandelt das gefilterte Empfangssignal FIL in ein Rechtecksignal gleicher Periodendauer um, das einem Zeitmesser 24 zugeführt wird. Der Zeitmesser 24 beaufschlagt einen Minimumkomparator 25 und einen Maximumkomparator 26, deren Ausgangssignale einen Rechtecksignalgenerator 33 steuern. Dieser erzeugt eine Rechteckspannung, die an dem Bewerter 27 anliegt. Ein erster Ausgang VAL1 des Bewerters 27 ist mit einer zweiten Signalisationseinheit 28 für ein "Abgehendes Signal" (FWD), ein zweiter Ausgang VAL2 des Bewerters 27 ist mit einer dritten Signalisationseinheit 30 für ein "Ankommendes Signal" (BWD) verbunden.

Der Komparator 23 dient zur trivialen Erzeugung eines Zustandes "Signal Nein"=0 oder "Signal Ja"=1, abhängig von der mit der Einrichtung 31 vorgegebenen Schwelle für die Stärke des Empfangssignals. Wenn der Komparator den Zustand "Signal Nein"=0 ermittelt, erfolgt eine Sperrung des Zeitmessers 24, des Minimumkomparators 25, des Maximumkomparators 26 und des Bewerters 27 sowie eine Signalisation an der ersten Signalisationseinheit 29, daß keine Messungen möglich sind.

Ermittelt der Komparator 23 den Zustand "Signal Ja"=1, wird mit dem Zeitmesser 24 fortlaufend die sich aufgrund der Modulation ändernde Periodendauer des Empfangssignals FIL gemessen. Wenn die Periodendauer einen Minimum-Schwellwert erreicht, wird der Minimumkomparator 25 eingeschaltet, wenn die Periodendauer einen Maximum-Schwellwert erreicht, wird der Maximumkomparator 26 eingeschaltet.

Zu diesem Zweck ist der Zeitmesser 24 in Form eines Zählers realisiert, dessen Zählfrequenz wesentlich höher ist, als die erste Frequenz F1 und der beim Nulldurchgang einer ersten Flanke des von dem Konverter 32 erzeugten Rechtecksignals gestartet und mit einer folgenden zweiten Flanke gestoppt wird. Der Zähler weist zwei Register auf, und zwar ein erstes Register für einen aktuellen Zählerstand und ein zweites Register für den zuvor erreichten Zählerstand. Die Ausgänge beider Register sind mit einem internen Vergleicher (nicht dargestellt) verbunden, der nach dem Vergleich ein Signal "größer als", "gleich" oder "kleiner als" erzeugt. Nach der Erzeugung dieses Vergleichssignals wird der Inhalt des ersten Registers in das zweite Register geladen und der Zähler für die nächste Messung wieder freigegeben. Der Vergleicher kann dabei so ausgebildet sein, daß immer nur dann ein Vergleichssignal erzeugt wird, wenn sich das Vergleichsergebnis ändert. Folglich ist ein Periodendauer-Minimum vorhanden, und der Minimumkomparator 25 wird geschaltet, wenn einen Wechsel von "kleiner als" auf "gleich" stattfindet. Im umgekehrten Fall, das heißt bei einem Wechsel von "größer als" auf "gleich" ist dann ein Periodendauer-Maximum vorhanden und der Maximumkomparator 26 wird geschaltet. Diese Ausführung hat den Vorteil, daß keine Frequenz abhängigkeit besteht. Die obere Grenzfrequenz des Eingangssignals, die Genauigkeit und die Reaktionszeit dieses Schaltungsteils 24 ist nur von der Taktfrequenz abhängig.

Alternativ dazu kann ein zusätzlicher Komparator vorgesehen sein, dem der Zählerstand und Vergleichswerte zugeführt werden, die die beiden Schwellwerte repräsentieren. Schließlich könnten zu dem obengenannten Zweck auch analoge Verfahren realisiert werden, bei denen ein Kondensator in Abhängigkeit von der Periodendauer geladen und über eine Abtast-und-Halteschaltung sowie einen analogen Komparator der Vergleich durchgeführt wird.

Durch ein Schalten des Minimum- und des Maximumkomparators 25, 26 erfolgt jeweils ein Flankenwechsel der durch den Rechtecksignalgenerator 33 erzeugten Rechteckspannung, deren Periodendauer somit gleich der Periodendauer der zweiten Frequenz F2 des Senders 1 ist. Diese Rechteckspannung kann alternativ auch mit einem Demodulator erzeugt werden.

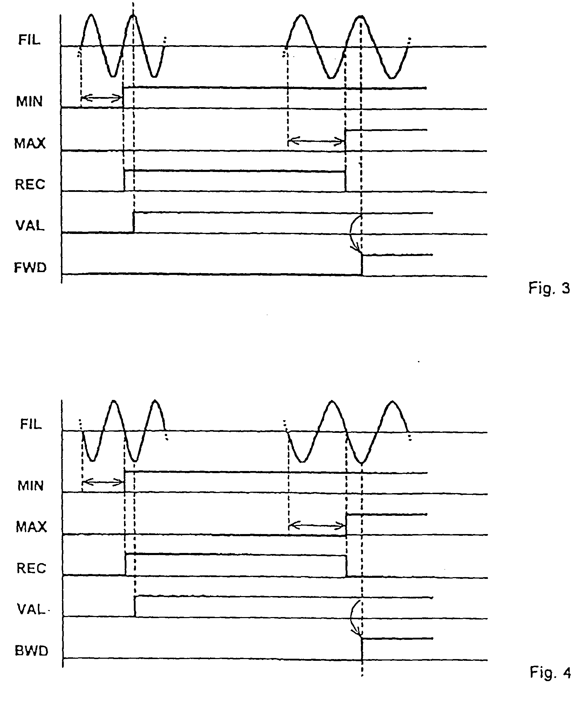

Fig. 3 zeigt beispielhaft die Signalverläufe und deren Verknüpfungen für den Fall der Signalisierung "Abgehendes Signal" an der zweiten Signalisationseinheit 28. Durch das Schaltsignal MIN des Minimumkomparators 25 nimmt die Rechteckspannung REC einen 1-Pegel an, durch das Schaltsignal MAX des Maximumkomparators 26 fällt REC wieder auf 0-Pegel ab.

Diese Rechteckspannung REC wird nun in dem Bewerter 27 mit dem gefilterten Empfangssignal FIL verknüpft und als erstes Ausgangssignal VAL1 der zweiten Signalisationseinheit 28 zugeführt, die ein Signal FWD erzeugt, wenn bei einer 0/1- Flanke des Rechtecksignals REC die Polarität des Empfangssignals FIL positiv ist und bei der folgenden 1/0-Flanke des Rechtecksignals REC die Polarität des Empfangssignals FIL wieder positiv ist. Diese ist zum Beispiel dann der Fall, wenn sich der Empfänger 20 über der Leitung 6 an der Position 10 befindet.

Fig. 4 zeigt die entsprechenden Signalverläufe und deren Verknüpfungen für den Fall der Signalisierung "Ankommendes Signal" an der dritten Signalisationseinheit 30. Durch das Schaltsignal MIN des Minimumkomparators 25 nimmt die Rechteckspannung REC wiederum den 1-Pegel an, durch das Schaltsignal MAX des Maximumkomparators 26 fällt REC wieder auf 0-Pegel ab. Diese Rechteckspannung REC wird anschließend in dem Bewerter 27 mit dem gefilterten Empfangssignal FIL verknüpft und als zweites Ausgangssignal VAL2 der dritten Signalisationseinheit 30 zugeführt, die ein Signal BWD erzeugt, wenn bei einer 0/1- Flanke des Rechtecksignals REC die Polarität des Empfangssignals FIL negativ ist und bei der folgenden 1/0-Flanke des Rechtecksignals REC die Polarität des Empfangssignals FIL wieder negativ ist. Diese ist zum Beispiel dann der Fall, wenn sich der Empfänger 20 über der Leitung 8 an der Position 11 befindet.

Ob im praktischen Fall eine positive oder negative Halbwelle des Empfangssignals FIL an dem Bewerter 27 anliegt, hängt von der Orientierung der Empfangsantenne 21 über der Leitung 6, 8 ab. Wenn die Empfangsantenne zum Beispiel eine horizontal gerichtete Stabkernspule ist und der Empfänger 20 über der Leitung 6, 8 um 180° gedreht wird, entsteht eine Phasenverschiebung des Empfangssignals von 180°. Dadurch wechselt auch das Aktivierungssignal von FWD auf BWD bzw. umgekehrt. Ein wesentlicher Kern der Erfindung besteht also darin, daß die Amplitude des Trägerfrequenzanteils des Empfangssignals (erste Frequenz F1) aufgrund dieser Drehung des Empfängers eine Phasenverschiebung erfährt, während der daraus gewonnene niederfrequente Anteil (Signal REC mit zweiter Frequenz F2) unverändert bleibt.

Wenn also der Empfänger 20 beziehungsweise die Empfangsantenne mit in Bezug auf die Leitung unveränderter Ausrichtung an dieser entlanggeführt wird (6, 7, 8), wird immer die zweite Signalisierungseinrichtung 28 (mit dem Signal FWD) aktiviert. Wenn hingegen der Empfänger quer über die Leitungen geführt wird, entsteht über der zweiten Leitung 8 ein Wechsel des Aktivierungssignals auf BWD, da die Orientierung der Empfangsantenne dort um 180° gegenüber der ersten Leitung 6 gewechselt hat. Die Ermittlung der Position des Empfängers 20 relativ zu einer Leitung erfolgt in bekannter Weise durch Auswertung der Stärke bzw. des Pegels des Empfangssignals.

Die Unterscheidung zwischen "Abgehendem Signal" und "Ankommendem Signal" geschieht somit durch eine genaue Bestimmung der Periodendauer bei gleichzeitiger Bewertung der Polarität des Empfangssignals. Das betreffende Aktivierungssignal wird erst dann erzeugt, wenn nach einem Periodendauer-Minimum mit positiver (Figur 3) beziehungsweise negativer (Figur 4) Halbwelle ein Periodendauer-Maximum mit positiver (Figur 3) beziehungsweise negativer (Figur 4) Halbwelle auftritt. Ist dies nicht der Fall, so wird davon ausgegangen, daß das entsprechende Periodendauer-Minimum durch eine Störung erzeugt wurde, oder daß das Periodendauer-Maximum wegen einer Störung nicht gefunden werden konnte.

Mit dem beschriebenen Verfahren ist somit eine Erkennung der Signalrichtungen "Abgehend" und "Ankommend" unabhängig von der Länge und den komplexen Parametern der Leitung möglich. Darüberhinaus kann die Störunterdrückung weiter verbessert werden, und zwar einerseits durch eine durch die Erfindung ermöglichte, sehr geringe Bandbreite des Filters 22 und andererseits durch eine Wiederholung der Messungen und Bewertungen mehrerer aufeinanderfolgender Resultate, wobei zum Beispiel die Aktivierungsignale FWD, BWD die zweite und dritte Signalisierungseinrichtung 28, 30 erst dann aktivieren, wenn diese jeweils mindestens zweimal aufeinanderfolgend aufgetreten sind.

Je größer das Verhältnis zwischen der ersten und der zweiten Frequenz ist, desto schmalbandiger kann das Eingangsfilter 22 dimensioniert werden und desto besser können Störeinflüsse unterdrückt werden, wobei stochiastische Störungen im Durchlaßbereich des Filters 22 durch die oben genannte Mehrfach-Bewertung eliminiert werden. Die erste Frequenz F1 kann zum Beispiel 500 Hz und die zweite Frequenz F2 5 Hz betragen. Wenn die Parameter des Modulators 4 so gewählt werden, daß ein resultierender Frequenzhub von +/- 5 Hz entsteht, kann das Filter mit Grenzfrequenzen von 495 Hz und 505 Hz sehr schmalbandig gehalten werden. Ein Vorteil dieser Dimensionierung besteht darin, daß insbesondere die Oberwellen der Netzfrequenz vollständig unterdrückt werden und ebenfalls keine Störungen verursachen können.

Eine weitere Verbesserung der Signalisierungen kann erreicht werden, wenn die Signalisierungseinheiten aus verschiedenen Signalgebern bestehen, beispielsweise optischen Signalgebern, deren Signale sich durch Farbe, Symbol oder Text unterscheiden und/oder akustischen Signalgebern, deren Signale sich durch Tastung, Tonhöhe oder Lautstärke unterscheiden.

Eine vereinfachte Ausführung der Vorrichtung verwendet nur einen der beiden Komparatoren, und zwar entweder den Minimumkomparator 25 oder den Maximumkomparator 30.

Ein besonderer Vorteil der erläuterten Ausführungsform besteht auch daran, daß die Signalverarbeitung fast vollständig digitalisiert erfolgen und zum Beispiel mit einem Mikroprozessor ausgeführt werden kann. Dies beruht im wesentlichen darauf, daß kein analoger Demodulator erforderlich ist, sondern die Demodulation auf digitalem Wege stattfindet.

## Patentansprüche

1. Verfahren zur Ortung einer metallischen Leitung durch Einkopplung eines Sendesignals in die Leitung und Empfangen und Auswerten des Pegels eines von der Leitung abgestrahlten Empfangssignals, dadurch gekennzeichnet, daß das Sendesignal (17) durch Modulation einer ersten Trägerfrequenz (F1) mit einer zweiten, niedrigeren Frequenz (F2) erzeugt wird, und daß das Empfangssignal (FIL) im Hinblick auf seine Periodendauer und seine von der Ausrichtung einer Empfangsantenne zu der Leitung abhängigen Polarität ausgewertet wird, um eine Signalisierung "Abgehendes Sendesignal" oder "Ankommendes Sendesignal" bezüglich der Richtung des Signalflusses in der Leitung zu erzeugen.

2. Verfahren nach Anspruch 1, dadurch gekennzeichnet, daß fortlaufend die sich aufgrund der Modulation ändernde Periodendauer des Empfangssignals FIL gemessen und eine Signalisierung "Abgehendes Sendesignal" erzeugt wird, wenn nach einem Periodendauer-Minimum mit positiver Halbwelle ein Periodendauer-Maximum mit positiver Halbwelle auftritt.

3. Verfahren nach Anspruch 1 oder 2, dadurch gekennzeichnet, daß fortlaufend die sich aufgrund der Modulation ändernde Periodendauer des Empfangssignals FIL gemessen und eine Signalisierung "Ankommendes Sendesignal" erzeugt wird, wenn nach einem Periodendauer-Minimum mit negativer Halbwelle ein Periodendauer-Maximum mit negativer Halbwelle auftritt.

4. Verfahren nach Anspruch 2 oder 3, dadurch gekennzeichnet, daß die Signalisierung erst erzeugt wird, wenn die Bedingung mehrfach hintereinander aufgetreten ist.

5. Vorrichtung zur Ortung einer metallischen Leitung mit einem Sender zur Erzeugung eines in die Leitung einkoppelbaren Sendesignals sowie einem Empfänger zum Empfangen und Auswerten des Pegels eines von der Leitung abgestrahlten Empfangssignals, dadurch gekennzeichnet, daß der Sender (1) ein erstes Mittel (2) zur Erzeugung einer ersten Trägerfrequenz (F1), ein zweites Mittel (3) zur Erzeugung einer zweiten, niedrigen Frequenz (F2), sowie einen Modulator (4) zur Modulation der ersten Frequenz (F1) mit der zweiten Frequenz (F2) aufweist, und daß der Empfänger (20) eine Auswerteeinrichtung umfaßt, mit der das Empfangssignal (FIL) im Hinblick auf seine Periodendauer und seine von der Ausrichtung einer Empfangsantenne zu der Leitung anhängigen Polarität ausgewertet wird und die eine zweite Signalisationseinheit (28) für ein "Abgehendes Signal" und eine dritte Signalisationseinheit (30) für ein "Ankommendes Signal" beaufschlagt.

6. Vorrichtung nach Anspruch 5, dadurch gekennzeichnet, daß die Auswerteeinrichtung einen Zeitmesser (24), einen Minimumkomparator (25), einen Maximumkomparator (26) und einen Rechteckgenerator (33) aufweist, mit dem eine Rechteckspannung erzeugt wird, die einen Flankenwechsel aufweist, wenn die Periodendauer des Empfangssignals einen Minimum-Schwellwert oder einen Maximum-Schwellwert erreicht und die in einem Bewerter (27) anhand des Empfangssignals (FIL) zur Beaufschlagung der zweiten Signalisationseinheit (28) und der dritten Signalisationseinheit (30) ausgewertet wird.

7. Vorrichtung nach Anspruch 5 oder 6, dadurch gekennzeichnet, daß die zweite und dritte Signalisationseinheit (28, 30) verschiedene Signalgeber wie optische Signalgeber, deren Signale sich durch Farbe, Symbol oder Text unterscheiden und/oder akustische Signalgeber, deren Signale sich durch Tastung, Tonhöhe oder Lautstärke unterscheiden, aufweist.
